# EUROPEAN PATENT APPLICATION

(11) **EP 1 739 163 A1**
(43) Date of publication of application: **03.01.2007**
(21) Application number: 05381033.9
(22) Date of filing: 30.06.2005
(51) Int. Cl.: C12H 1/22, B65D 6/00, C12G 3/06

(54) **Deposit for fermenting, ageing or storing wine**

(71) Applicant: Uniriver Ebro, S.L., 01306 La Puebla de Labarca (Alava) (ES)
(72) Inventor: Echepare Fernandez, Enrique, 01306, LA PUEBLA DE LABARCA (Alava) (ES)
(74) Representative: Urizar Anasagasti, Jesus Maria

(57) **Abstract**

A deposit for fermenting, ageing or storing wine with similar functions to those of a cask comprising: a metal structure (1) preferably of stainless steel and a generally polyhedral configuration, forming at least the edges and vertices of the deposit; wooden side walls (2) invariably joined to said structure (1); a metal bottom (3) welded with an inclination towards the front, where it has an emptying tap (8) and/or decanting tap (9); and an also metal or wooden, fixed or removable upper cover (4), including a wide opening (5) provided with a sealed closure.

## Description

As the title indicates, the invention refers to a deposit having the purpose of temporarily storing the wine so that it acquires and develops its qualities, so that it can later be a crianza or reserva wine according to the time it remains therein.

Deposits intended for wine ageing until now were constituted by casks made of oak, in which the different controls required during the ageing process cannot be performed with complete efficacy, nor can a thorough cleaning thereof be performed, due to which their useful life is reduced to a short period of time. Manufacturing oak casks is a complex and virtually handcrafted process and the storage properties they offer are limited, given that they are not only elements of circular section but they also have the drawback that they longitudinally have a greater diameter in the central area than at the ends, due to which it is necessary to use wedges or structures to achieve proper storage under minimum conditions.

The deposit of the present invention acquires functions equivalent to a wooden cask, comprising for this purpose a metal structure, preferably of stainless steel and a generally polyhedral configuration, forming the edges and vertices of the deposit, whereas the side walls are made up of tongue and groove wooden boards, laterally supported by a metal frame that is screwed onto the metal structure forming the deposit. The bottom of the deposit is also of metal and is tilted towards the front where it has taps for emptying and decanting the wine, whereas the upper cover, also of metal, is fixed or removable and includes a wide opening provided with a sealed closure.

The metal frame holding the lateral sides, formed by wooden boards, is removable, the metal structure in this type of deposits having an unlimited life, in contrast with traditional casks, the maximum life of which is 9 years providing bouquet; the lateral sides in this deposit may be changed after nine years, which means a total cost of only about 1/5 of the total deposit. A series of tension devices for tightening the tongue and groove joints of the wooden parts, formed by screws arranged on the edge of the metal frame laterally holding them, acts directly or with an intermediate flexible element against the outer board in order to tighten it axially and frontally by compression, allowing the elimination of leaks normally existing in the traditional system.

Traditional cask toasting is also a complex and virtually never uniform process, whereas by substituting the curved boards forming the cask with straight boards with tongue and grooving on the edges, these can be toasted with the appropriate degree to satisfy the different demands of each winery.

The polyhedral, preferably parallelepiped configuration of this deposit together with the inclusion of lower supporting legs corresponding to upper seating areas, allows easy stacking thereof, as well as the arrangement of lower cavities forming engagement areas for transporting forks or other upper means for hanging the deposit by means of a hook, allowing easy transport thereof and a great storage capacity without the unused spaces existing in a cask storage area.

These and other features of the present invention will be more easily understood with the following description based on a practical embodiment; said description is made based on the attached drawings, wherein:
Figures 1 and 2 show the corresponding elevational and profile views of a preferred embodiment of a deposit for ageing wine carried out according to the present invention.
Figures 3 and 4 show the corresponding sections of one of the corners of this deposit in which the manner of coupling the wooden side walls (10) with the metal structure (1) forming said deposit can be clearly observed.
Figures 5 and 6 show, respectively, the corresponding sections of the upper corners of the deposits, one of them carried out with a tubular structure (1a) and the other one with an angular structure (1b), as well as the corresponding solutions for a welded or screwed cover (4).
Figure 7 shows a corner section of a polyhedral deposit for an area in which there are studs for tightening and immobilising the wooden sides forming the deposit.
Figure 8 shows a section equivalent to the previous one, in this case of a parallelepiped deposit at the area in which there is one of the side tension devices laterally putting pressure on the set of tongue and groove boards (10).
Figure 9 shows a vertical section view of a deposit with a frame defining eight sides.
Figure 10 shows a vertical section of an embodiment variant of the previous deposit.
Figure 11 shows the union carried out in the previous deposit between the wooden sides in the corner areas in the case of the deposit of the previous figure.
Figure 12 shows a front elevational view of one of the possible stacking solutions in this type of deposits.

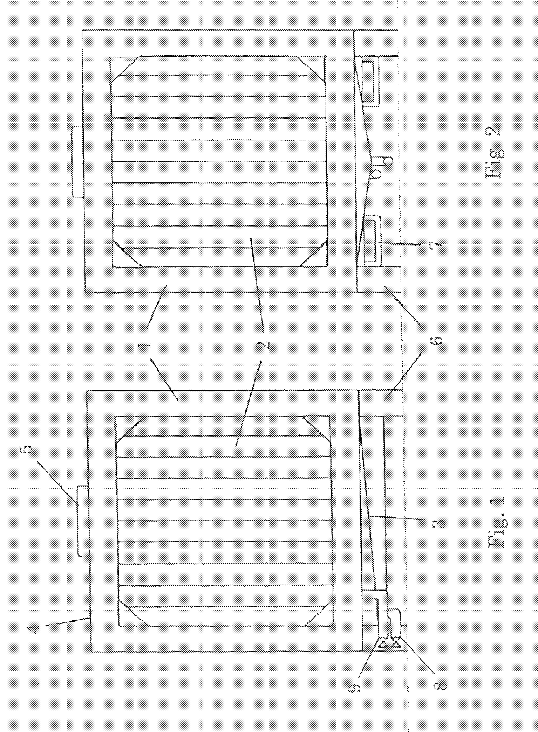

First in reference to Figures 1 and 2, a deposit for ageing wine is shown having a metal structure (1) preferably of stainless steel and with a generally polyhedral configuration, in this case a parallelepiped, said structure (1) forming the edges and vertices of the deposit as well as the supporting legs (6). The side walls (2) are of oak wood, suitably toasted according to the demands of each wine-producer. The bottom (3) is of metal and is tilted towards the front where it has the corresponding emptying tap (8) and decanting tap (9). The upper cover (4) is also of metal and has a wide opening (5) provided with a sealed closure.

The side walls (2) are made up of tongue and groove wooden boards (10), laterally supported by a metal frame (11) which is screwed by means of studs (14) to the metal structure (1) forming the deposit. As can be seen in Figures 3, 4, 7 and 8 this metal frame (11) is L-shaped, one of the wings of which is externally located above the outermost wooden board (10), whereas the other wing is located on the outer edge of said board butting against the metal structure (1), externally having a welded stop (15) retaining said frame (11) making its outward movement impossible.

It is also observed in the area where the outermost tongue and groove wooden board (10) and the metal surface (1) converge that there is a joint (13) having different configurations, all of these resolving the problem of leak-tightness between both types of materials.

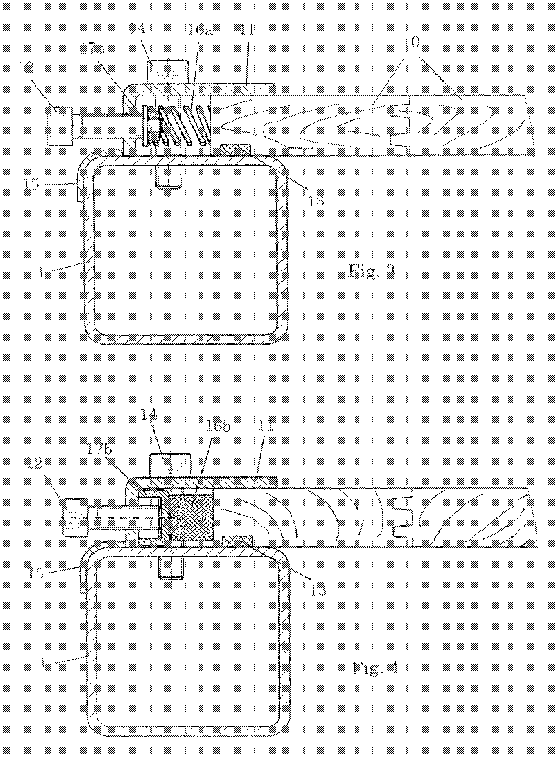

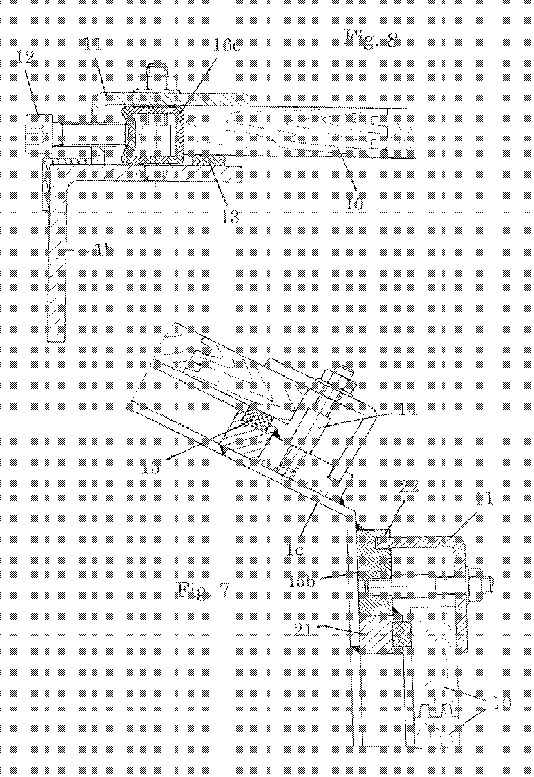

The frame (11) has tension devices for tightening the tongue and groove joints of the wooden parts (10) made up of screws (12) arranged in a variable number on the edge of said frame (11), acting against the outermost board (10), tightening it axially and frontally by compression in order to achieve suitable leak-tightness in the tongue and groove joints. As can be seen in Figure 3, there is an intermediate spring (16a) between the head (17a) of the screw (12) and the corresponding wooden board (10). Figure 4 shows that arranged between a supplementary part (17b) receiving the action of all the tension screws (12) and the corresponding tongue and groove board, there is a resilient element (16b). For its part, the intermediate element in Figure 8 is a metal square bar (16c) having a certain forming capacity due to the stress it is subjected to at certain points by the tension devices (12) acting on the opposite side against the tongue and groove board (10).

As can be seen in Figures 1 and 2 the metal structure (1) forming this deposit has corner supporting legs (6) slightly lifting the bottom (3) of the container in order to allow the outlet of the emptying conduit (8) and decanting conduit (9) on the underside, respectively located flush with the bottom (3) and with a bent and slightly raised end so that the possible lees or residues remain on the bottom of the deposit when decanting. Corresponding cavities (7) forming engagement areas for transporting forks are observed on one of the sides, located at an appropriate distance below the supporting legs. Independently from the existence of said cavities the structure may be provided on the upper portion with hooks or cables for lifting the deposit by other means.

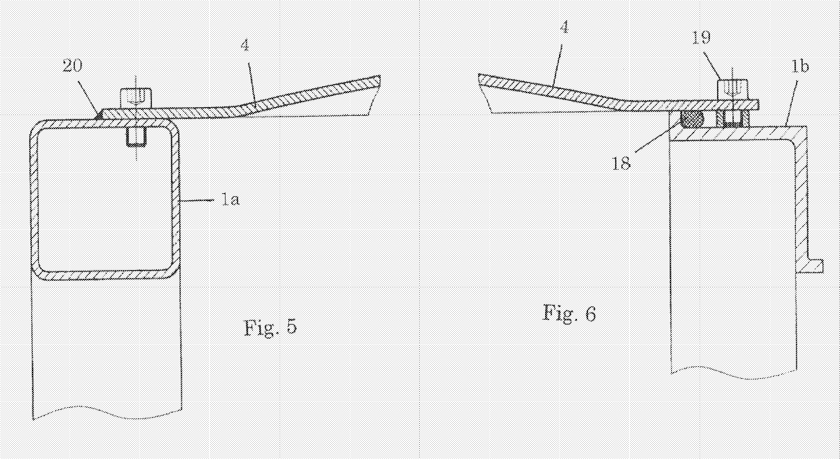

A solution is observed in Figure 5 in which the cover (4) is peripherally welded (20) to the structure (1) forming the deposit. In Figure 6 the cover (4) is fixed to the peripheral structure (1) by means of screws (19), a leak-tight joint (18) being placed between both elements.

The structure (1) forming this deposit can be made up of a tubular profile (1a), preferably of a quadrangular section, to which the wooden boards are fixed on its outer side such that the structure (1a) is included within the deposit. Another alternative solution observed in Figures 6, 7 and 8 is made up of a structure formed by an angular profile, be it straight (1b) or obtuse (1c), fixing the wooden sides (2) on the outer side in both cases. Observed in Figure 7 is an angular profile (1c) forming an obtuse angle in this case suitable for forming a polygonal, not quadrangular, contour structure, or a closed polyhedral volume in which the angular profile (1c), the elements welded on the outside (15b) and (21), and the intermediate joint (13) placed against the wooden boards (10), have a peripherally closed configuration.

Another manner of fixing the metal frame (11) can be seen in Figure 7, the angular profile (1c) in this case having two welded bands, the first of these (21) on the edge externally having slots for placing a peripheral joint (13) whereas the other band (15b) is welded on the back and defines slots (22) suitable for including the frame (11) within it and several openings in the front in which to screw a stud (14) immobilising the frame (11), trapping the end board (10) making up the wooden sides (2) of the deposit between itself and the joint (13).

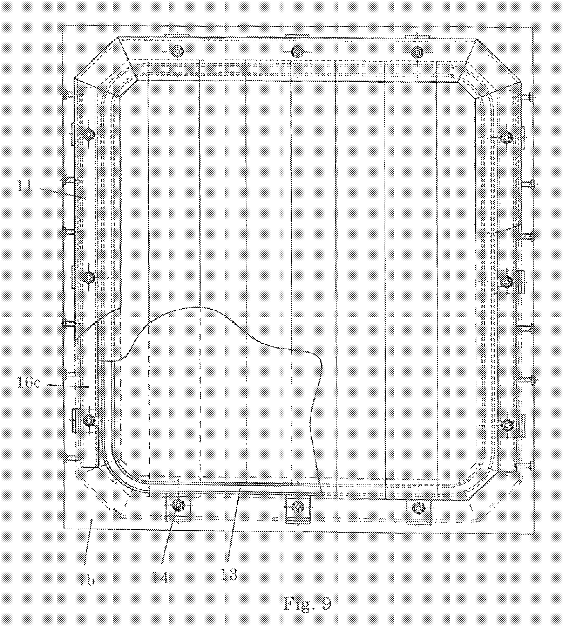

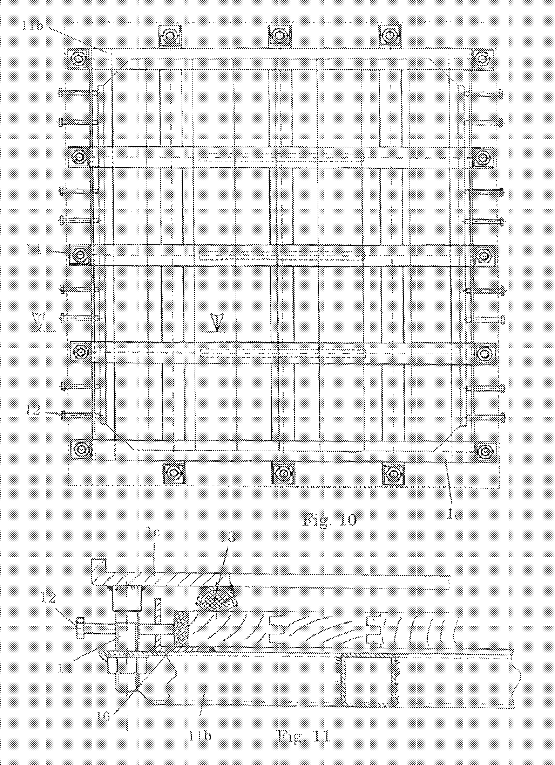

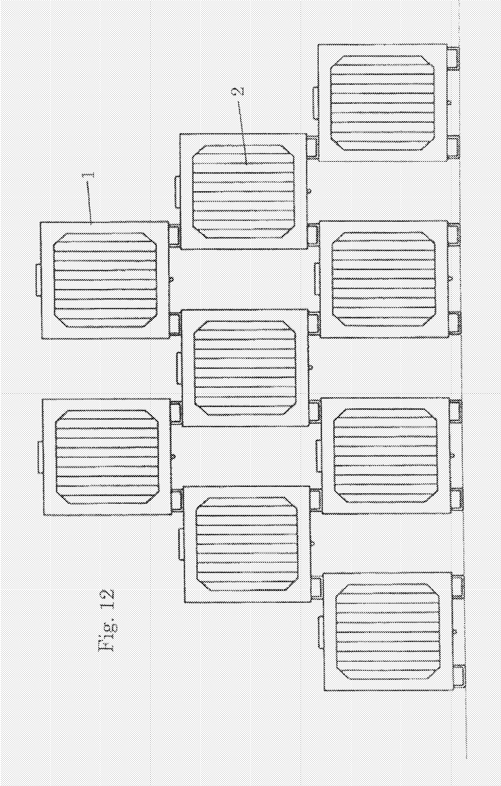

The configuration of the structure allows several solutions. In Figure 1, for example, a parallelepiped, almost cube-shaped deposit is observed in which the structure, whether formed by angular or tubular profiles, forms the edges thereof. In Figure 9 the structure has a closed profile, in this case octagonal, the same as the leak-tight joint (13), the frame (11) and generally all the elements form corner joints such as that represented in Figure 7. Figure 10 shows an embodiment of the structure (1c) in which angular profiles are combined with tubular profiles as can be seen in the corner joint shown in Figure 11, where a variation in the frame (11b) can be seen which in this case is reduced to a straight strip with a small lateral fold.

The polyhedral configuration of the deposit allows simple stacking by placing one deposit of these features on top of another one, for which purpose seating bases are arranged in the area of the cover (4) and in correspondence with the legs (6), allowing a stable positioning with the capacity to support several heights. Figure 12 shows a stacking variant in which a space exists between two consecutive deposits such that easy access both to the emptying and decanting taps of the upper deposits and to the upper opening (5) is allowed with this distribution an.

## Claims

1. A deposit for fermenting, ageing or storing wine, inside which the wine acquires and develops its qualities, **characterised in that** it comprises: a) a metal structure (1) preferably of stainless steel and a generally polyhedral configuration, forming at least the edges and vertices of the deposit; b) wooden side walls (2) invariably joined to said structure (1); c) a metal bottom (3) welded with an inclination towards the front, where it has and emptying tap (8) and/or decanting tap (9); and d) an also metal or wooden, fixed or removable upper cover (4), including a wide opening (5) provided with a sealed closure.

2. A deposit according to claim 1, **characterised in that** the side walls (2) are removable and formed by tongue and groove wooden boards (10), laterally supported by a metal frame (11) screwed on the metal structure (1) forming the deposit.

3. A deposit according to claims 1 and 2, **characterised in that** the metal frame (11) laterally holding the wooden sides (2) is L-shaped, one of the wings of which is externally located above the outermost wooden board (10), whereas the other wing is located on the outer edge of said board butting against the metal structure (1), externally having a welded stop (15) retaining said frame (11), making its outward movement impossible.

4. A deposit according to claims 1 to 3, **characterised in that** the frame (11) laterally holding the wooden sides (2) on the sides parallel to the boards (10) forming said sides, has tension devices for tightening the tongue and groove joints of the wooden parts (10), formed by screws (12) arranged on the edge of the metal frame (11) in variable numbers, acting directly or with an intermediate spring (16a) or another intermediate resilient element (16b), against the outer board (10), axially and frontally tightening it by compression.

5. A deposit according to claims 1 to 4, **characterised in that** the end boards (10) forming each of the sides (2) of the deposit have on their inner side, in the area opposite to the structure, a leak-tight joint (13) of different types which is trapped when the metal frame (11) screwed (14) on the structure (1) is externally fixed.

6. A deposit according to claims 1 to 5, **characterised in that** the metal structure (1) forming it has corner supporting legs (6) and a seating base on the upper corners for said legs, thus allowing stacking successive deposits.

7. A deposit according to claims 1 to 6, **characterised in that** the metal structure (1) forming it has cavities (7) on its lower end forming engagement areas for transporting forks, and/or hooks or equivalent fixing means on its upper portion for a lifting cable or hook.

8. A deposit according to claims 1 to 7, **characterised in that** the metal structure (1) forming it is made up of a tubular profile (1a) preferably of a quadrangular section, the wooden boards (10) being fixed on its outer edges such that the structure is included within the deposit.

9. A deposit according to claims 1 to 7, **characterised in that** the metal structure (1) forming it is made up of a straight (1b) or obtuse (1c) angular profile, the wooden boards (10) being fixed on its outer sides.

10. A deposit according to claim 9, **characterised in that** close to the angle, said angular profile (1c) externally has the corresponding stops (15b) having slots (22) suitable for immobilising the respective frames (11) therein, and a square bar (21) on the end of its wings externally defining slots suitable for including the joint (13), providing airtightness to the wooden board (10) pressed against it from the outside.

11. A deposit according to claim 10, **characterised in that** said angular profile (1c) and the elements welded therein have a plan or frontal closed polygonal configuration, the joint (13) forming a peripherally closed element.
